# EUROPÄISCHE PATENTSCHRIFT

(11) **EP 4 041 597 B1**
(45) Veröffentlichungstag und Bekanntmachung des Hinweises auf die Patenterteilung: **27.09.2023**
(21) Anmeldenummer: 20797045.0
(22) Anmeldetag: 12.10.2020
(51) Int. Cl.: B60Q 1/068

(54) **EINSTELLVORRICHTUNG FÜR EINEN SCHEINWERFER**
ADJUSTING DEVICE FOR A HEADLIGHT
DISPOSITIF DE RÉGLAGE POUR UN PROJECTEUR

(30) Priorität: 10.10.2019 DE 102019127345
(43) Veröffentlichungstag der Anmeldung: 17.08.2022
(73) Patentinhaber: EJOT SE & Co. KG, 57319 Bad Berleburg (DE)
(72) Erfinder: FISCHER, Torsten, 57319 Bad Berleburg (DE); DEUTENBERG, Thomas, 57413 Finnentrop (DE); SCHROEDER, Joachim, 57319 Bad Berleburg (DE); RAUSCH, Uwe, 99897 Tambach-Dietharz (DE); MATOUSEK, Radim, 62100 Brno (CZ)
(74) Vertreter: Puschmann Borchert Kaiser Klettner Patentanwälte Partnerschaft mbB
(86) Internationale Anmeldenummer: PCT/EP2020/078630
(87) Internationale Veröffentlichungsnummer: WO 2021/069744

(56) Entgegenhaltungen:
- WO-A1-2013/064164
- DE-A1-102010 061 428
- DE-A1-102017 122 102
- FR-A1- 2 719 651
- GB-A- 2 355 516
- JP-A- H05 151 801
- JP-A- H09 161 506

## Beschreibung

Die Erfindung betrifft eine Einstellvorrichtung für einen Scheinwerfer gemäß dem Oberbegriff des Anspruchs 1.

Gattungsgemäße Einstelleinrichtungen für einen Scheinwerfer eines Kraftfahrzeuges werden in einem Fahrzeug verwendet, um eine Einstellung der Scheinwerfer nach Fertigstellung des Fahrzeugs zu ermöglichen.

Die DE 10 2010 0617 428 A1 offenbart eine entsprechende Einstelleinrichtung mit einer Stellschraube mit einem Kegelrad, wobei das Kegelrad drehbar mit einer Stellschraube verbunden ist, indem das Kegelrad eine Schnappverbindung aufweist und eine Gegenhaltestruktur umgreift, so dass das Kegelrad in Axialrichtung festgelegt ist.

Ferner ist ein Übertragungsteil vorgesehen, das das Kegelrad formschlüssig mit der Stellschraube drehfest koppelt. Durch das Übertragungsteil kann so nach erfolgter erstmaliger Einstellung auch eine einfache bedarfsgemäße Entkopplung erfolgen, so dass später im Betrieb keine unbeabsichtigte Verstellung eintritt.

Die DE 10 2010 061 437 A1 offenbart eine Einstellvorrichtung mit einer Stellschraube, die drehfest mit einem Antriebsrad in Umfangsrichtung formschlüssig im Eingriff steht und in Axialrichtung über ein Rastverbindung mit einer Gegenhaltestruktur eingerastet ist.

In den genannten Anwendungen wird eine axiale Rastverbindung unmittelbar zwischen Antriebsrad und Stellschraube hergestellt.

Die WO 2013 / 064164 A1 offenbart eine Einstellvorrichtung für einen Scheinwerfer, bei welcher eine Stellspindel mit einem Dichtungsflansch versehen ist. Die Stellspindel wird durch ein Gehäuse gesteckt und an ihrem rückseitigen Ende mit einer Anordnung verbunden, bei der ein Übertragerlement und ein Antriebszahnrad über das das Gehäuse durchsetzende Stellspindelende geschoben und mit diesem verbunden wird. Dies erlaubt eine Montage mit geringem Kraftaufwand.

Es ist Aufgabe der Erfindung eine Einstellvorrichtung zur Scheinwerferverstellung anzugeben, bei der niedrige Montagekräfte bei möglichst geringem Bauraum erzielt werden und eine einfache Abdichtung zwischen Stellschraube und Antriebsrad über das Gehäuse erreicht werden kann, bei der das Verstellmoment für die Stellschraube in engen Grenzen gehalten werden kann.

Die Aufgabe wird durch die kennzeichnenden Merkmale des Anspruchs 1 gelöst.

Die Unteransprüche bilden vorteilhafte Weiterbildungen der Erfindung.

Eine Einstellvorrichtung für einen Scheinwerfer umfasst in bekannter Weise eine Stellschraubenanordnung, umfassend eine Stellschraube und ein Antriebsrad über das die Stellschraube in Drehung versetzbar ist. Ferner weist die Stellschraubenanordnung ein Übertragerelement auf, das die Drehbewegung von dem Antriebsrad auf die Stellschraube überträgt. So weisen das Übertragerelement und die Stellschraube ineinandergreifende Formschlusskonturen zur Übertragung der Drehbewegung zwischen Übertragerelement und Stellschraube auf. Zudem weist das Antriebsrad und das Übertragerelement Formschlussstrukturen auf, über die eine Drehbewegung vom Antriebsrad auf das Übertragerelement übertragen werden kann.

Weiter bekannt ist, dass die Stellschraube einen Anschlussbereich aufweist, so dass das Übertragerelement, das auf die Stellschraube aufgeschoben werden kann, im zusammengebauten Zustand, die Stellschraube im Anschlussbereich hintergreifen kann. Das Antriebsrad und das Übertragerelement sind derart aufeinander abgestimmt, dass das Antriebsrad über das Übertragerelement geschoben werden kann, so dass, im zusammengebauten Zustand, das Übertragerelement mit der Stellschraube einen in Axialrichtung wirkenden Formschluss herstellt und das Übertragerelement und das Antriebsrad über eine Rastverbindung axial zueinander festgelegt sind.

Erfindungsgemäß ist vorgesehen, dass das Antriebsrad einen hohlzylindrischen Bereich umfasst, in den am äußeren Umfang eine Ringnut zur Aufnahme einer Dichtung, insbesondere einer O-Ring-Dichtung, eingebracht ist.

Durch die Einbringung der Ringnut in den hohlzylindrischen Teil des Antriebsrads, über den die Stellschraubenanordnung im Gehäuse gelagert ist und gegenüber diesem abgedichtet ist, kann eine Radialdichtung zwischen zwei Kunststoffteilen erfolgen.

Diese Anordnung ist besonders vorteilhaft, da durch die Verwendung von Kunststoff die Normwerte für gängige O-Ringe zuverlässig eingehalten werden können, insbesondere im Hinblick auf axiale Toleranzen. So kann bevorzugt in die Ringnut eine Dichtung, insbesondere eine O-Ring-Dichtung eingesetzt sein.

Gemäß einer weiteren, besonders vorteilhaften Weiterbildung kann das Übertragerelement einen hohlzylindrischen Bereich, insbesondere ein Kopfteil umfassen, an dem eine umlaufende Rippe angeordnet ist. Dies ermöglicht eine zuverlässige Abdichtung gegenüber dem Antriebsrad. Das Kopfteil des Übertragerelements ist ausgehend von der umlaufenden Rippe zum antriebsradseitige Ende als einseitig geschlossene Hülse ausgebildet, so dass, ggfs. zwischen der Stellschraube und dem Übertragerelement eindringendes, Wasser nicht auf die Antriebsradseite der Einstelleinrichtung gelangen kann.

Auf diese Weise kann durch die erfindungsgemäße Anordnung eine zuverlässige Dichtung realisiert werden, da ausschließlich Dichtungen zwischen Kunststoffteilen notwendig sind.

Die erfindungsgemäße Anordnung legt so das Übertragerelement an der Stellschraube fest, wobei die Rastverbindung, die letztendlich die axiale Position zwischen Stellschraube und Antriebsrad festlegt, zwischen dem Übertragerelement und dem Antriebsrad hergestellt wird.

Dies hat den Vorteil, dass die Stellschraube aus Stahl hergestellt sein kann, das Übertragerelement und das Antriebsrad aus Kunststoff, so dass durch die Kunststoff/Kunststoff-Rastverbindung verbesserte Verbindungseigenschaften gegenüber einer Stahl/Kunststoff Verbindung erzielt werden können. Insbesondere können die Geometrien derart aufeinander abgestimmt werden, dass geringe Montagekräfte bei hohen Auszugskräften vorliegen.

Gemäß einer Weiterbildung der Erfindung sind die Formschlusskonturen zur Übertragung der Drehbewegung am von dem Gewinde abgelegenen Ende der Stellschraube angeordnet. Dies hat den Vorteil, dass das Stellschraubenende in Form eines Außenantriebs und das Übertragerelement in Form eines Innenantriebs gestaltet werden kann. Dadurch kann auch eine axiale Arretierung des Übertragerelements in Richtung des Gewindes der Stellschraube erreicht werden.

Gemäß einer weiteren bevorzugten Ausgestaltung sind das Antriebsrad und das Übertragerelement ausgebildet, um an dem Ende, das dem gewindetragenden Teil der Stellschraube zugewandt ist, zur Übertragung einer Drehbewegung ineinanderzugreifen. Dadurch kann durch die Formschlussstrukturen gleichzeitig eine axiale Arretierung des Antriebsrads gegenüber der Stellschraube in Richtung des Gewindes der Stellschraube erreicht werden.

In besonders vorteilhafter Weise kann der Anschlussbereich der Stellschraube eine Ringschulter aufweisen. Dies lässt sich insbesondere unter Verwendung einer Stellschraube aus Stahl gut herstellen. Der Anschlussbereich des Übertragerelements weist dazu korrespondierende Formteile auf, die die Ringschulter hintergreifen können. Auf diese Weise kann ein in Axialrichtung formschlüssiges Festlegen des Übertragerelements an der Stellschraube erfolgen, wenn die Formteile formschlüssig in der hintergriffenen Position gehalten werden.

Um die Formteile formschlüssig in der hintergriffenen Position zu halten, kann das Übertragerelement in bevorzugter Weise im Anschlussbereich eine Spreizhülse aufweisen, die Spreizelemente umfasst, die zur Ringschulter korrespondierende Formteile aufweisen. Die Formteile können sich auch dadurch ergeben, dass eine Rille im Spreizelement der Spreizhülse ausgenommen ist.

Zur formschlüssigen Festlegung der Formteile des Übertragerelements an der Stellschraube kann das Antriebsrad einen Innendurchmesser aufweisen, der in etwa dem Außendurchmesser der Spreizhülse im eingebauten, nicht gespreizten Zustand entspricht. Auf diese Weise wird ein Aufspreizen der Spreizelemente bei axialem Zug zuverlässig verhindert. So kann letztendlich das Übertragerelement formschlüssig an der Stellschraube gehalten werden.

Der Anschlussbereich liegt, in Axialrichtung gesehen, bevorzugt zwischen den Formschlusskonturen zur Übertragung der Drehbewegung zwischen Übertragerelement und Stellschraube und den Formschlussstrukturen zur Übertragung einer Drehbewegung vom Antriebsrad auf das

Übertragerelement. So können die unterschiedlichen Bereiche der Stellschraubenanordnung explizit ausschließlich ihrer zugeordneten Funktionen gemäß gestaltet werden.

Weiter bevorzugt weisen das Antriebsrad und / oder das Übertragerelement Rastmittel auf, so dass sich bei einem auf das Übertragerelement aufgesteckten Antriebsrad eine axiale Festlegung des Antriebsrads am Übertragerelement, insbesondere in Axialrichtung entgegen dem Gewinde der Stellschraube ergibt. Die Rastmittel sind bevorzugt so aufeinander abgestimmt, dass möglichst geringe Montagekräfte bei der Verrastung entstehen und dennoch eine hohe Abzugskraft gewährleistet ist.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine erfindungsgemäße Einstellvorrichtung;
- Fig. 2a: eine Seitenansicht einer Stellschraubenanordnung vor dem Zusammenbau;
- Fig. 2b: eine Seitenansicht einer Stellschraubenanordnung in einem ersten Montageschritt;
- Fig. 2c: eine Seitenansicht einer Stellschraubenanordnung in einem zweiten Montageschritt;
- Fig. 2d: eine Seitenansicht einer Stellschraubenanordnung im zusammengebauten Zustand;
- Fig. 3: eine Schnittansicht der Stellschraubenanordnung gemäß Fig. 2a;
- Fig. 4a: eine Seitenansicht der Stellschraube;
- Fig. 4b: eine Schnittansicht des Übertragerelements;
- Fig. 4c: eine Schnittansicht des Antriebsrads;
- Fig. 5: eine Schnittansicht der Stellschraubenanordnung gemäß Fig. 2d;
- Fig. 6a: eine Seitenansicht einer Kombination einer weiteren Ausführung aus Antriebsrad und Übertragerelement, und
- Fig. 6b: eine Schnittansicht der Kombination aus Fig. 6a.
- Fig. 7: eine Detail-Schnittansicht einer Einstelleinrichtung mit einer Kombination gemäß Fig. 6a.

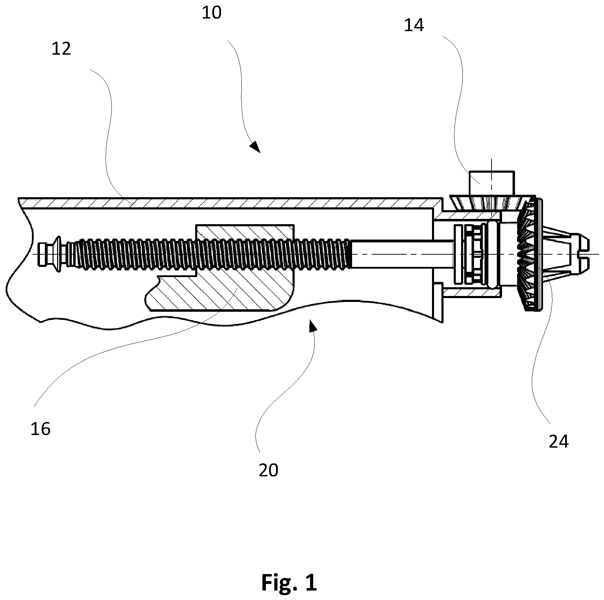

Fig. 1 zeigt eine Einstellvorrichtung 10 für einen Scheinwerfer (nicht gezeigt). Die Einstellvorrichtung umfasst in bekannter Weise eine Stellschraubenanordnung 20, die in einem Gehäuse 12 drehbar gelagert ist und von einem Kegelrad 14 angetrieben wird. Der Scheinwerfer wird über einen mit der Stellschraubenanordnung 20 verbundenen, im Gehäuse 12 lineargeführten Stellblock 16 eingestellt. Das Kegelrad 14 treibt ein Antriebsrad 24 der Stellschraubenanordnung 20 an, um diese in Drehung zu versetzen.

Im Folgenden wird die erfindungsgemäße Stellschraubenanordnung 20 der Einstellvorrichtung 10 näher beschrieben.

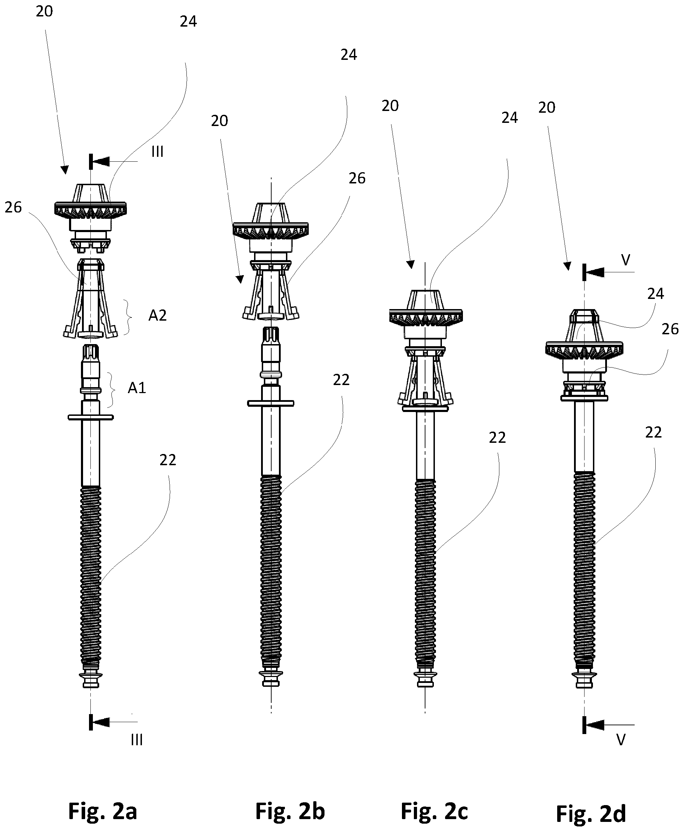

Die Figuren 2a bis 2d zeigen verschiedene Montagephasen beim Zusammenbau einer erfindungsgemäßen Stellschraubenanordnung 20.

Fig. 2a zeigt die erfindungsgemäße Stellschraubenanordnung 20 in einer Seitenansicht vor der Montage. Die Stellschraubenanordnung 20 umfasst eine Stellschraube 22, und ein Antriebsrad 24, über das die Stellschraube 22 in Drehung versetzbar ist. Ferner weist die Stellschraubenanordnung 20 ein Übertragerelement 26 auf, das die Drehbewegung von dem Antriebsrad 24 auf die Stellschraube 22 überträgt.

Erfindungsgemäß ist vorgesehen, dass die Stellschraube 22 einen Anschlussbereich A1 aufweist, so dass das Übertragerelement 26, das auf die Stellschraube 22 aufgeschoben wird, im zusammengebauten Zustand, die Stellschraube 22 im Anschlussbereich A1 hintergreift. Das Übertragerelement 26 weist dazu einen korrespondierend ausgestalteten Anschlussbereich A2 auf.

Das Antriebsrad 24 und das Übertragerelement 26 sind derart aufeinander abgestimmt, dass das Antriebsrad 24 über das Übertragerelement 26 geschoben werden kann, so dass, im zusammengebauten Zustand, das Übertragerelement 26 mit der Stellschraube 22 einen in Axialrichtung wirkenden Formschluss herstellt und das Übertragerelement 26 und das Antriebsrad 24 über eine Rastverbindung axial zueinander festgelegt sind.

So umfasst die erfindungsgemäße Stellschraubenanordnung 20 drei Komponenten, die für den Betrieb montiert werden.

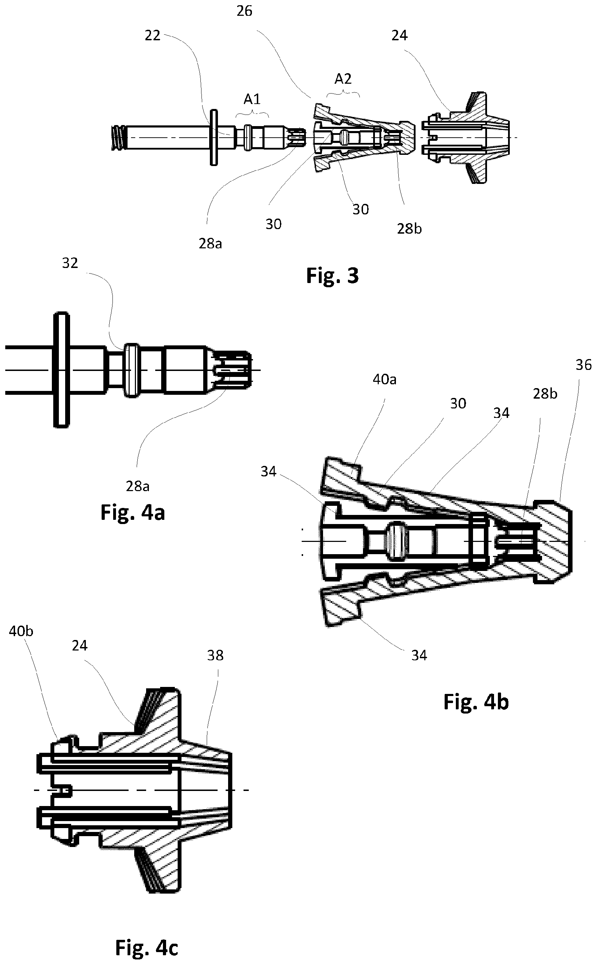

Die Gestaltung der Komponenten, nämlich Stellschraube 22, Übertragerelement 26 und Antriebsrad 24, ist in den Figuren 3 bis 4c näher beschrieben.

Fig. 2b zeigt, dass für eine optimale Montage zuerst das Antriebsrad 24 teilweise auf das Übertragerelement 26 aufgeschoben wird, so dass sich eine leichte Vorspannung für Spreizelemente des Übertragerelements 26 ergibt.

Dann kann gemäß Fig. 2c ein Aufschieben der Kombination aus Antriebsrad und Übertragerelement 26 erfolgen, und das Übertragerelement 26 kann so ausgerichtet werden, dass die Formschlussstrukturen zur Drehübertragung ineinandergreifen, wobei die Kombination gegenüber der Stellschraube 22 vorfixiert wird, sobald die Kombination und die Stellschraube ineinandergreifen.

Wie Fig. 2d zeigt wird zur endgültigen Montage das Antriebsrad 24 vollständig auf das Übertragerelement 26 aufgeschoben. Dieses ist nun sowohl drehfest als auch in Axialrichtung gegenüber der Stellschraube 22 fixiert, wodurch die Stellschraubenanordnung 20 betriebsbereit ist und in der Einstellvorrichtung 10 verbaut werden kann.

Fig. 3 zeigt die Detailschnittansicht zu Fig. 2a, wobei die Fig. 4a bis 4c vergrößerte Ansichten der Komponenten Stellschraube 22, Übertragerelement 26 und Antriebsrad 24 zeigen.

Der Anschlussbereich A1 der Stellschraube 22, und der Anschlussbereich A2 des Übertragerelements 26 sind so aufeinander abgestimmt, dass Formteile 30 des Übertragerelements 26 eine Rückhaltestruktur 32 der Stellschraube hintergreifen können. Die Rückhaltestruktur ist bevorzugt als Ringschulter ausgebildet.

Ferner weist das Übertragerelement 26 Formschlusskonturen 28b und die Stellschraube 22 Formschlusskonturen 28a auf, die zur Übertragung der Drehbewegung zwischen Übertragerelement 26 und Stellschraube 22 ineinandergreifen. Das Übertragerelement 26 und die Stellschraube 22 sind so aufeinander abgestimmt, dass die Formschlusskonturen 28a, 28b ineinandergreifen, wenn die Formteile 30 des Übertragerelements 26 die Rückhaltestruktur 32 der Stellschraube 22 hintergreifen.

Das Übertragerelement 26 ist in Form einer Spreizhülse ausgebildet, die einzelne Spreizelemente 34 umfasst, die gemeinsam in einem Kopfteil enden.

Am Ende des Kopfteils ist eine, insbesondere im Wesentlichen konische, Rasterhebung 36 angeordnet, die ein Verrasten mit dem Antriebsrad 24 ermöglicht. Das Antriebsrad 24 weist dazu korrespondierend zu der Rasterhebung 36 ausgebildete Rastfinger 38 auf, die im unbelasteten Fall aufgespreizt sind, um dann an die Stellschraube 22 angelegt zu werden, indem das Antriebsrad 24 über das Übertragerelement 26 geschoben wird.

Zudem weist das Antriebsrad 24 Formschlussstrukturen 40b auf, die im zusammengebauten Zustand in Eingriff mit Formschlussstrukturen 40a des Übertragerelements 26 sind, wodurch eine Drehbewegung vom Antriebsrad 24 auf das Übertragerelement 26 übertragen werden kann.

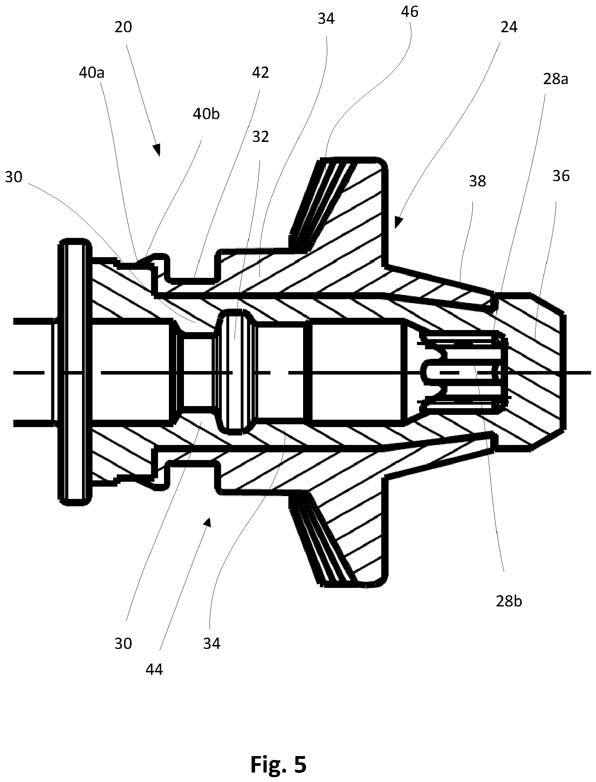

Fig.5 zeigt eine Detail-Schnittansicht der Stellschraubenanordnung 20 gemäß Fig. 2d im zusammengebauten Zustand.

Bei der erfindungsgemäßen Stellschraubenanordnung 20 wird das Übertragerelement 26 an der Stellschraube 22 durch das Antriebsrad 24 festgelegt. Das Antriebsrad 24 weist eine Verzahnung 46 auf und ist hülsenartig ausgebildet und weist einen hohlzylindrischen Bereich 44 auf. Es umschließt die Spreizelemente 34 des Übertragerelements 26 formschlüssig. Dadurch werden die Formteile 30, die die Rückhaltestruktur 32 der Stellschraube hintergreifen, in Position gehalten, wodurch das Übertragerelement 26 auch in Axialrichtung formschlüssig an der Stellschraube 22 festgelegt ist. Gleichzeitig greifen die Formschlussstrukturen 40a, 40b zur Übertragung der Drehbewegung vom Antriebsrad 24 auf das Übertragerelement 26, sowie die Formschlussstrukturen 28a, 28b zur Übertragung der Drehbewegung vom Übertragerelement 26 auf die Stelleschraube 22, ineinander.

Zur Fixierung des Antriebsrads 24 gegenüber dem Übertragerelement 26 in Axialrichtung ist eine Rastverbindung 36, 38 vorgesehen. Bei der Montage wird das Antriebsrad 24 über die Rasterhebung 36 geschoben, wobei sich am Antriebsrad 24 befindliche Rastfinger 38 aufspreizen und dann nach Überwinden der Rasterhebung 36 mit dieser verrasten.

Die Geometrie der Rastfinger 38 und der Rasterhebung 36 kann aufgrund der Tatsache, dass es sich sowohl bei dem Antriebsrad 24 als auch bei dem Übertragerelement 26 um Kunststoffteile handelt, in ihrer Form relativ frei bestimmt und zur Erreichung geringer Montagekräfte trotz hoher Abzugskräfte angepasst werden.

Ferner umfasst das Antriebsrad 24 in seinem hohlzylindrischen Bereich 44 eine Nut 42, in der eine Dichtung, insbesondere ein O-Ring aufgenommen werden kann, um das Antriebsrad gegenüber dem Gehäuse der Einstelleinrichtung abzudichten.

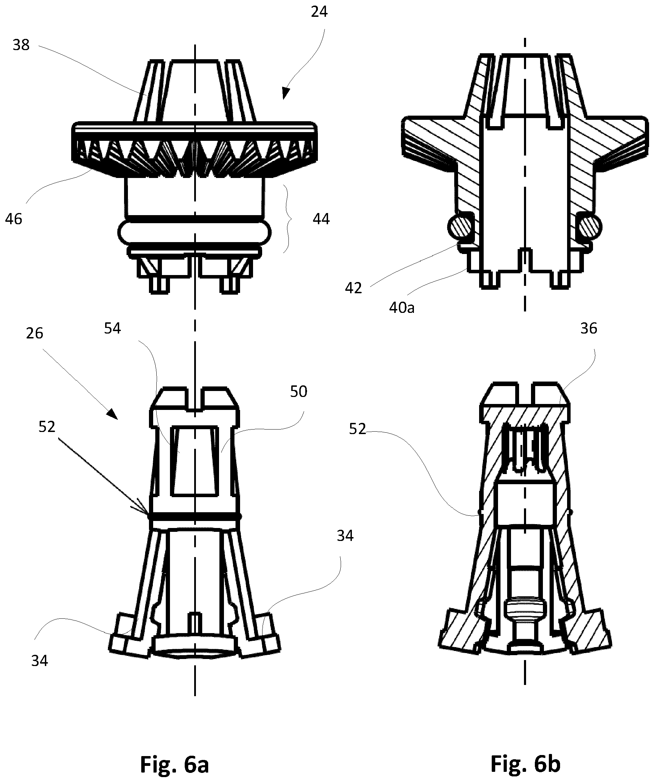

Fig. 6a zeigt eine Seitenansicht und Fig. 6b eine Schnittansicht eines Übertragerelements 26 und ein Antriebsrad 24 einer besonders bevorzugten Ausgestaltung einer erfindungsgemäßen Stellschraubenanordnung 20. Auf die Darstellung der Stellschraube 22 wird in dieser Figur verzichtet, da diese der Stellschraube 22 in Form und Funktion der Stellschraube 22, wie zuvor beschrieben entspricht.

Das Antriebsrad 24 weist eine Verzahnung 46 und einen daran anschließenden hohlzylindrischen Bereich 44 auf. In dem hohlzylindrischen Bereich 46 ist eine Nut 42 eingebracht. In der Nut 42 ist ein O-Ring 48 aufgenommen über den das Antriebsrad 24 gegen das Gehäuse der Einstelleinrichtung abgedichtet wird.

Die Rastfinger 38 sind am der dem hohlzylindrischen Bereich 44 gegenüberliegenden Seite der Verzahnung 46 angebracht.

Das Übertragerelement 26 ist als Spreizhülse ausgebildet und weist Spreizelemente 34 auf, die über das Antriebsrad 24 an der Stellschraube 22, wie zuvor beschrieben formschlüssig festlegbar sind.

Die Spreizelemente 34 sind mit Formschlusskonturen 40b versehen, um mit den Formschlusskonturen 40a des Antriebsrads 24 in Eingriff zu gelangen, um eine Drehbewegung zwischen diesen Teilen zu übertragen.

Die Spreizelemente 34 gehen in ein Kopfteil 50 über. Das Kopfteil bildet eine geschlossene Hülse, die auch stirnseitig abgeschlossen ist. Im stirnseitigen Bereich der Hülse sind die Formschlusskonturen 28b eingebracht.

Die Ausgestaltung gemäß der Fig. 6a, Fig. 6b unterscheidet sich von der Ausgestaltung gemäß Fig. 2 bis 5 dadurch, dass das Übertragerelement eine Rippe 52 am Kopfteil 50 aufweist. Das Kopfteil 50 ist jenseits der Rippe 52 in Richtung des stirnseitigen Antriebs vollständig geschlossen ausgebildet.

Ferner sind in dieser Ausgestaltung im Kopfteil 50 Einkerbungen 54 zur Aufnahme der Rastfinger 38 vorgesehen. Auf diese Weise können die Rastfinger neben der Verrastung mit der Rasterhebung 36 auch ein Drehmoment übertragen. Dadurch kann das übertragbare Drehmoment erhöht werden.

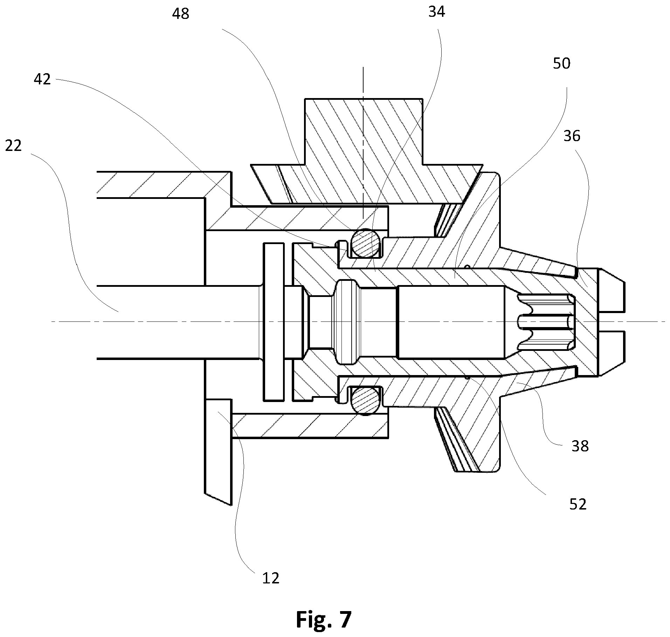

Fig. 7 zeigt eine Stellschraubenanordnung 20 gemäß den Fig. 6a, 6b in einer schematisch dargestellten Lagerung in einem Gehäuse 12 einer erfindungsgemäßen Einstelleinrichtung. Es werden im Wesentlichen die Unterschiede zur Ausführung gemäß Fig. 5 beschrieben.

Das Antriebsrad 24 umfasst eine Nut 42 in der ein O-Ring 48 aufgenommen ist. Durch die Ausbildung des Antriebsrads 24 aus Kunststoff, können die erforderlichen Axialtoleranzen zuverlässig eingehalten werden, so dass eine zuverlässige Dichtung zwischen dem Gehäuse 12 und dem Antriebsrad 24 vorliegt. Das Übertragerelement 26, dessen Spreizelemente 34 durch das Antriebsrad 24 formschlüssig gehalten werden, weist am äußeren Umfang seines geschlossenen Kopfteils 50 eine umlaufende Rippe 52 auf. Diese Rippe 52 dichtet das Übertragerelement 26, das wie die Rippe 52 ebenfalls aus Kunststoff gebildet ist, gegen das Antriebsrad 24 ab. Da das Kopfteil 50 wenigstens ab der Rippe 52 bis zum Kopfende geschlossen ausgeführt ist, kann im Ergebnis keine Flüssigkeit von der Stellschraube 22 auf die Seite des Gehäuses gelangen auf der die Verzahnung des Antriebsrads 46 liegt.

Erfindungsgemäß ist daher eine Einstelleinrichtung geschaffen, die bei niedrigen Montagekräften bei geringem Bauraum ein hohes Maß an Dichtigkeit gewährleistet.

## Patentansprüche

1. Einstellvorrichtung (10) für einen Scheinwerfer umfassend eine Stellschraubenanordnung (20) umfassend eine Stellschraube (22), ein Antriebsrad (24), über das die Stellschraube (22) in Drehung versetzbar ist und ein Übertragerelement (26), das die Drehbewegung von dem Antriebsrad (24) auf die Stellschraube (22) überträgt, wobei das Übertragerelement (26) und die Stellschraube (22) ineinandergreifende Formschlusskonturen (28a, 28b) zur Übertragung der Drehbewegung zwischen Übertragelement (26) und Stellschraube (22) aufweisen, wobei das Übertragerelement (26) und das Antriebsrad (24) Formschlussstrukturen (40a, 40b) aufweisen, über die eine Drehbewegung vom Antriebsrad (24) auf das Übertragerelement (26) übertragen werden kann, wobei die Stellschraube (22) einen Anschlussbereich (A1) aufweist, so dass das Übertragerelement (26), das auf die Stellschraube (22) aufgeschoben werden kann, im zusammengebauten Zustand, die Stellschraube (22) im Anschlussbereich (A1) hintergreift und einen in Axialrichtung wirkenden Formschluss herstellt, wobei ferner das Antriebsrad (24) über das Übertragerelement (26) geschoben werden kann, so dass, im zusammengebauten Zustand, der Anschlussbereich (A2) des Übertragerelements (26) am Anschlussbereich (A1) der Stellschraube (22) festgelegt ist, wobei das Übertragerelement (26) und das Antriebsrad (24) über eine Rastverbindung (36, 38) axial zueinander festgelegt werden, **dadurch gekennzeichnet, dass** das Antriebsrad einen hohlzylindrischen Bereich (44), zur Lagerung der Stellschraubenanordnung in einem Gehäuse, umfasst, in den am äußeren Umfang eine Ringnut (42) zur Aufnahme einer Dichtung eingebracht ist, um das Antriebsrad gegenüber dem Gehäuse abzudichten.

2. Einstellvorrichtung nach Anspruch 1, **dadurch gekennzeichnet, dass** in der Ringnut (42) ein Dichtungselement, insbesondere ein O-Ring (48), aufgenommen ist.

3. Einstellvorrichtung nach Anspruch 1 oder 2, **dadurch gekennzeichnet, dass** das Übertragerelement (26) ein geschlossenes Kopfteil (50) umfasst, an dem eine umlaufende Rippe (52) angeordnet ist.

4. Einstellvorrichtung nach einem der vorangehenden Ansprüche, **dadurch gekennzeichnet, dass** die Stellschraube (22) aus Metall, das Antriebsrad (24) und das Übertragerelement (26) aus Kunststoff hergestellt ist.

5. Einstellvorrichtung nach einem der vorangehenden Ansprüche, **dadurch gekennzeichnet, dass** die Formschlusskonturen (28a, 28b) zur Übertragung der Drehbewegung am von dem Gewinde abgelegenen Ende der Stellschraube (22) angeordnet sind.

6. Einstellvorrichtung nach einem der vorangehenden Ansprüche, **dadurch gekennzeichnet, dass** der Anschlussbereich (A1) der Stellschraube (22) eine Rückhaltestruktur (32), insbesondere in Form einer Ringschulter, aufweist, und der Anschlussbereich (A2) des Übertragerelements korrespondierende Formteile (30) aufweist, die die Rückhaltestruktur (32) hintergreifen.

7. Einstellvorrichtung nach Anspruch 6, **dadurch gekennzeichnet, dass** das Übertragerelement (26) als eine Spreizhülse ausgebildet ist, die im Anschlussbereich (A2) Spreizelemente (34) aufweist, welche zur Rückhaltestruktur korrespondierende Formteile (30) aufweisen.

8. Einstellvorrichtung nach einem der vorangehenden Ansprüche, **dadurch gekennzeichnet, dass** das Antriebsrad (24) einen Innendurchmesser aufweist, der in etwa dem Außendurchmesser der Spreizhülse im Anschlussbereich (A1) im eingebauten Zustand entspricht.

9. Einstellvorrichtung nach Anspruch 8, **dadurch gekennzeichnet, dass** das Antriebsrad (24) und / oder das Übertragerelement (26) Rastmittel (36, 38) aufweist, so dass sich bei einem auf das Übertragerelement (26) aufgestecktem Antriebsrad (24) eine axiale Festlegung des Antriebsrads (24) am Übertragerelement (26) ergibt.

10. Einstellvorrichtung nach einem der vorangehenden Ansprüche, **dadurch gekennzeichnet, dass** das Antriebsrad (24) und das Übertragerelement (26) an dem dem gewindetragenden Teil der Stellschraube (22) zugewandten Ende Formschlussstrukturen (40a, 40b) aufweisen, die zur Übertragung einer Drehbewegung ineinandergreifen.

## Claims

1. Adjusting device (10) for a headlight comprising an adjusting screw arrangement (20) that in turn comprises an adjusting screw (22), a drive wheel (24) which is adapted to drive said adjusting screw (22) to rotate, and a transmission element (26) which transmits the rotational movement from said drive wheel (24) to said adjusting screw (22), said transmission element (26) and said adjusting screw (22) having meshing form-fit contours (28a, 28b) for transmitting the rotary movement between said transmission element (26) and said adjusting screw (22), said transmission element (26) and said drive wheel (24) having form-fit structures (40a, 40b) which can be used to transmit a rotary movement from said drive wheel (24) to said transmission element (26), said adjusting screw (22) having a connection region (A1) which enables said transmission element (26), which can be slid onto said adjusting screw (22), to engage behind said adjusting screw (22) in said connection region (A1) in the assembled state and thus produce a form fit acting in the axial direction, with said drive wheel (24) furthermore being adapted to be slid over said transmission element (26) so that, in the assembled state, said connection region (A2) of said transmission element (26) is fixed in position on said connection region (A1) of said adjusting screw (22), wherein said transmission element (26) and said drive wheel (24) are fixed axially to one another via a latching connection (36, 38), **characterized in that** said drive wheel comprises a hollow-cylindrical region (44) for mounting said adjusting screw arrangement in a housing, into the outer circumference of which an annular groove (42) has been made that is adapted to accommodate a gasket therein for sealing said drive wheel from said housing.

2. Adjusting device according to claim 1, **characterized in that** a sealing element, in particular an O-ring (48), is accommodated in said annular groove (42).

3. Adjusting device according to one of claims 1 and 2, **characterized in that** said transmission element (26) comprises a closed head portion (50) having a circumferential rib (52) arranged thereon.

4. Adjusting device according to any one of the preceding claims, **characterized in that** said adjusting screw (22) is made of metal, said wheel (24) and said element (26) are made of plastic.

5. Adjusting device according to any one of the preceding claims, **characterized in that** said form-fit contours (28a, 28b) for transmitting said rotary movement are arranged at the end of said adjusting screw (22) remote from its thread.

6. Adjusting device according to any one of the preceding claims, **characterized in that** said connection region (A1) of said adjusting screw (22) includes a retaining structure (32), in particular in the form of an annular shoulder, and said connection region (A2) of said transmission element has correspondingly shaped portions (30) that engage behind said retaining structure (32).

7. Adjusting device according to claim 6, **characterized in that** said transmission element (26) is designed as an expansion sleeve having expansion elements (34) in said connection area (A2) that has portions (30) shaped to correspond to said retaining structure.

8. Adjusting device according to any one of the preceding claims, **characterized in that** said drive wheel (24) has an inner diameter which corresponds approximately to the outer diameter of said expansion sleeve in said connection area (A1) in the mounted state.

9. Adjusting device according to claim 8, **characterized in that** said drive wheel (24) and/or said transmission element (26) is provided with latching means (36, 38), so as to cause said drive wheel (24) to be axially fixed in position on said transmission element (26) when said drive wheel (24) is mounted on said transmission element (26).

10. Adjusting device according to any one of the preceding claims, **characterized in that** said drive wheel (24) and said transmission element (26) have form-fit structures (40a, 40b) on the end facing the thread-bearing part of said adjusting screw (22), which form-fit structures mesh with one another for transmitting a rotary movement.

## Revendications

1. Dispositif de réglage (10) pour un projecteur comprenant un ensemble de vis de réglage (20) comprenant une vis de réglage (22), une roue motrice (24), par l'intermédiaire de laquelle la vis de réglage (22) peut être amenée en rotation et un élément de transmission (26), qui transmet le mouvement de rotation à partir de la roue motrice (24) sur la vis de réglage (22), dans lequel l'élément de transmission (26) et la vis de réglage (22) présentent des contours à complémentarité de forme (28a, 28b) s'imbriquant pour la transmission du mouvement de rotation entre l'élément de transmission (26) et la vis de réglage (22), dans lequel l'élément de transmission (26) et la roue motrice (24) présentent des structures à complémentarité de forme (40a, 40b), par l'intermédiaire desquelles un mouvement de rotation à partir de la roue motrice (24) sur l'élément de transmission (26) peut être transmis, dans lequel la vis de réglage (22) présente une zone de raccordement (A1), de sorte que l'élément de transmission (26), qui peut être poussé sur la vis de réglage (22), dans l'état assemblé, vient se plaquer derrière la vis de réglage (22) dans la zone de raccordement (A1) et établit une complémentarité de forme agissant dans la direction axiale, dans lequel en outre la roue motrice (24) peut être glissée au-dessus de l'élément de transmission (26), de sorte que, dans l'état assemblé, la zone de raccordement (A2) de l'élément de transmission (26) est fixée sur la zone de raccordement (A1) de la vis de réglage (22), dans lequel l'élément de transmission (26) et la roue motrice (24) sont fixés axialement l'un par rapport à l'autre par l'intermédiaire d'une liaison d'encliquetage (36, 38), **caractérisé en ce que** la roue motrice comprend une zone cylindrique creuse (44), pour le montage de l'ensemble de vis de réglage dans un boîtier, dans lequel une rainure annulaire (42) pour la réception d'un joint est ménagée sur la circonférence extérieure, afin d'étanchéifier la roue motrice par rapport au boîtier.

2. Dispositif de réglage selon la revendication 1, **caractérisé en ce qu'**un élément d'étanchéité, en particulier un joint torique (48), est reçu dans la rainure annulaire (42).

3. Dispositif de réglage selon la revendication 1 ou 2, **caractérisé en ce que** l'élément de transmission (26) comprend une partie de tête fermée (50), sur laquelle est disposée une nervure périphérique (52).

4. Dispositif de réglage selon l'une quelconque des revendication précédentes, **caractérisé en ce que** la vis de réglage (22) est fabriquée à partir de métal, la roue motrice (24) et l'élément de transmission (26) à partir de matière plastique.

5. Dispositif de réglage selon l'une quelconque des revendication précédentes, **caractérisé en ce que** les contours à complémentarité de forme (28a, 28b) pour la transmission du mouvement de rotation sont disposés à l'extrémité de la vis de réglage (22) éloignée du filet.

6. Dispositif de réglage selon l'une quelconque des revendication précédentes, **caractérisé en ce que** la zone de raccordement (A1) de la vis de réglage (22) présente une structure de retenue (32), en particulier sous la forme d'un épaulement annulaire, et la zone de raccordement (A2) de l'élément de transmission présente des parties formées (30) correspondantes, qui viennent se plaquer derrière la structure de retenue (32).

7. Dispositif de réglage selon la revendication 6, **caractérisé en ce que** l'élément de transmission (26) est réalisé sous la forme d'une douille à expansion, qui présente dans la zone de raccordement (A2) des éléments à expansion (34), lesquels présentent des parties formées (30) correspondant à la structure de retenue.

8. Dispositif de réglage selon l'une quelconque des revendication précédentes, **caractérisé en ce que** la roue motrice (24) présente un diamètre intérieur, qui correspond à peu près au diamètre extérieur de la douille à expansion dans la zone de raccordement (A1) dans l'état installé.

9. Dispositif de réglage selon la revendication 8, **caractérisé en ce que** la roue motrice (24) et/ou l'élément de transmission (26) présente des moyens d'encliquetage (36, 38), de sorte que lorsque la roue motrice (24) est emboîtée sur l'élément de transmission (26), il se produit une fixation axiale de la roue motrice (24) sur l'élément de transmission (26).

10. Dispositif de réglage selon l'une quelconque des revendication précédentes, **caractérisé en ce que** la roue motrice (24) et l'élément de transmission (26) présentent à l'extrémité tournée vers la partie de la vis de réglage (22) portant le filet des structures à complémentarité de forme (40a, 40b), qui s'imbriquent pour la transmission d'un mouvement de rotation.
